# EUROPÄISCHE PATENTSCHRIFT

(11) **EP 1 737 697 B1**
(45) Veröffentlichungstag und Bekanntmachung des Hinweises auf die Patenterteilung: **01.09.2010**
(21) Anmeldenummer: 05742776.7
(22) Anmeldetag: 22.04.2005
(51) Int. Cl.: B60N 2/28

(54) **EINRICHTUNG FÜR EINEN KINDERSITZ**
DEVICE FOR A CHILD SEAT
DISPOSITIF DESTINE A UN SIEGE ENFANT

(30) Priorität: 23.04.2004 DE 102004020402
(43) Veröffentlichungstag der Anmeldung: 03.01.2007
(73) Patentinhaber: Continental Teves AG & Co. oHG, 60488 Frankfurt am Main (DE)
(72) Erfinder: RIETH, Peter, 65343 Eltville (DE); DIEBOLD, Jürgen, 65760 Eschborn (DE); HALASY-WIMMER, Georg, 71706 Markgröningen (DE); ARBITMANN, Maxim, 61348 Bad Homburg (DE)
(86) Internationale Anmeldenummer: PCT/EP2005/051818
(87) Internationale Veröffentlichungsnummer: WO 2005/102771

(56) Entgegenhaltungen:
- DE-A1- 4 243 826
- US-A- 5 552 986
- US-A1- 2002 188 393
- PATENT ABSTRACTS OF JAPAN Bd. 2000, Nr. 02, 29. Februar 2000 (2000-02-29) & JP 11 321496 A (MAZDA MOTOR CORP), 24. November 1999 (1999-11-24)

## Beschreibung

Die Erfindung betrifft eine Einrichtung für einen Kindersitz und einen Kindersitz sowie ein Fahrzeug mit einer Einrichtung für einen Kindersitz.

Kindersitze werden vermehrt in Fahrzeugen mit sogenannten ISO-Fix Haltesystemen befestigt. Hierzu befinden sich am ISO-Fix-Kindersitz zwei Greifarme, die in die passenden Gegenstücke im Fahrzeug eingerastet werden. Dabei entsteht eine absolut feste Verbindung zwischen Kindersitz und Fahrzeug. Bei einem Unfall wird dadurch die Bremsverzögerung des Fahrzeugs unmittelbar an den Kindersitz weitergegeben. Die "misuse"-Gefahr konnte durch ISO-FIX deutlich gesenkt werden. Zunehmend zu den beiden Rastarmen werden die Kindersitze durch einen zusätzlichen Gurt (der Top Tether) fixiert. Ein mit einem ISO-Fix-Befestigungssystem ausgestatteter Kindersitz ist in der DE 102 16 070 C1 beschrieben.

Eine Vielzahl von Dokumenten befasst sich mit der Erkennung von Kindersitzen, wenn diese auf dem Sitz eines Fahrzeugs befestigt werden. Dabei werden Sensoren eingesetzt, die auf das Befestigen des Kindersitzes auf dem Sitz reagieren. In Abhängigkeit von dem Sensorsignal, werden Beifahrerairbags deaktiviert, um Verletzungen des Kindes zu vermeiden (EP 0 603 733 A1, DE 44 10 402 A1).

Die DE 36 35 644 A1 beschreibt eine Sitzplatzbelegungseinrichtung, die anhand eines Personendetektors die Belegung des Sitzes ermittelt. In Abhängigkeit von dem Sensorsignal des Personendetektors werden Komforteinrichtungen des Fahrzeugs automatisch angesteuert.

Kindersitze für Kraftfahrzeuge weisen bereits viele Merkmale zur Verbesserung der passiven Sicherheit für Babys und Kinder im Falle eines Unfalls auf. Dazu gehören Schulterpolster zum Schutz des Hals- und Kopfbereichs, 5-Punkt Gurtsysteme, passive Absorber in der Kopfstütze und den Seitenwangen teilweise sogar mit Luftpolstern, die vor Fahrtbeginn an die Ergonomie des zu schützenden Kindes angepasst werden müssen.

Alle diese passiven Schutzmaßnahmen greifen nur dann optimal, wenn diese auch tatsächlich vor Fahrtbeginn an das Kind angepasst werden.

Der Nachteil dieser passiven Schutzmaßnahmen ist, dass sie in der Regel die Bewegungsfreiheit der Kinder stark einschränken und so ein entspanntes Fahren ohne "Protest" von der Rückbank nur möglich ist, wenn die vorhandenen passiven Schutzmaßnahmen nicht voll ausgenutzt werden.

Aus der dem Oberbegriff entsprechenden US2002/0188393A1 ist ein System zur Verringerung von Fahrzeugkollisionsschäden bekannt, das die relative Geschwindigkeit zwischen dem eigenen Fahrzeug und einem Objekt, beispielsweise einem anderen Fahrzeug und basierend auf Geschwindigkeit und Distanz zum Objekt eine Gefahrenschwelle ermittelt. Abhängig von der Gefahrenschwelle werden Maßnahmen zur Minimierung der Verletzungsgefahr von Insassen eingeleitet, beispielsweise ein Airbag entsprechend eingestellt, ein Gurtstraffer aktiviert und die Neigung eines Kindersitzes eingestellt.

Der Erfindung liegt die Aufgabe zugrunde, eine Einrichtung für einen Kindersitz, einen Kindersitz und ein Fahrzeug mit einem Kindersitz zur Verfügung zu stellen, die einerseits ein komfortables Sitzen des Kindes ermöglichen und andererseits im Gefahrenfall einen optimalen Schutz des Kindes gewährleisten.

Diese Aufgabe wird durch eine Einrichtung für einen Kindersitz mit den Merkmalen von Patentanspruch 1, einen Kindersitz mit den Merkmalen nach Patentanspruch 13 und ein Fahrzeug mit den Merkmalen nach Patentanspruch 16 gelöst.

Aus der DE 198 55 A1 ist zwar schon ein Beschleunigungssensor für einen Kindersitz vorgesehen, der einem Gurtaufroller für einen Helm zugeordnet ist. Dieses spezielle System schränkt die Bewegungsmöglichkeiten des Kindes während einer Reise jedoch noch weiter ein.

Erfindungsgemäß wird diese Aufgabe dadurch gelöst, dass eine Einrichtung für einen Kindersitz in einem Fahrzeug mit einer Umschaltung zwischen Komfort- und Sicherheitseinstellung des Kindersitzes vorgesehen ist, die abhängig von Informationen ist, die geeignet sind, einen Unfall vorherzusagen.

Die erfindungsgemäße Einrichtung des aktiven Kindersitzes kann im Wesentlichen folgende Elemente aufweisen:
- aktive Kopfstützenseitenwangen;
- aktive Schulterstützen;
- aktiver Fangtisch;
- aktive, kindersitzeigene Sicherheitsgurte.

Jede beliebige und sinnvolle Kombination der oben aufgezählten Elemente ist zulässig.

Die Elemente der Einrichtung des Kindersitzes werden vorzugsweise mittels elektromechanischer Smart-Aktuatoren betätigt.

Ein Vorteil der Erfindung ist, dass diese Elemente im deaktivierten Zustand in einer neutralen Ruheposition beharren und dem Kind ein sicheres und trotzdem bequemes Mitfahren mit entsprechend großer, kindgerechter Bewegungsfreiheit ermöglichen.

Vorteilhaft weist der Kindersitz zur Aktivierung der Elemente eine Datenschnittstelle und eine Stromversorgung auf. Vorzugsweise sind die Datenschnittstelle und die Stromversorgung Teil der Befestigungsvorrichtung des Kindersitzes. Dieser weist zweckmäßig eine ISO-FIX Standardbefestigung auf, so dass diese als Stromversorgung und Datenschnittstelle ausgebildet ist. Die Strom- und Datenanbindung ist zweckmäßig mit dem Fahrzeug-Innenraum Bussystem verbunden, so dass die Komfort- und Sicherheitsfunktionen an das Fahrzeug-Kommunikationsnetz angeschlossen sind. Über das Bussystem stehen den Komfort- und Sicherheitsfunktionen des Kindersitzes alle Informationen des Fahrzeugs zur Verfügung. Vorteilhaft wird mit der Umschaltung zwischen Komfort- und Sicherheitseinstellung des Kindersitzes, abhängig von Informationen (Precrash-Informationen), die vor einer Kollision über eine erwartete Kollision ermittelt werden, ein bequemes Reisen einerseits und ein optimaler Unfallschutz andererseits erreicht. Durch die Erfindung können übliche Fehlbedienungen unterbunden und die richtige Sitzposition bzw. Körperhaltung des Kindes in einer Precrash-Situation sichergestellt werden. Durch die aktive Einstellung/Verstellung der Rückhaltesysteme, wie Kopfstützen , Seitenwangen, Sicherheitsgurt oder sonstige Fangsysteme kann z.B. der Kopf eines schlafenden Kindes durch aktivierte Kopfstützenseitenwangen in eine günstigere, aufrechte Position gehoben werden bei gleichzeitiger Aktivierung von Schulterstützen und Straffung des Sicherheitsgurtes.

Außerhalb von einer Gefahrensituation soll eine angemessene Bewegungsfreiheit des Kindes erhalten bleiben um ein bequemes Mitreisen zu ermöglichen.

Dabei werden im Fahrzeug vorhandene Informationen so logisch verknüpft und bewertet, dass ein Gefahrenpotential ermittelt werden kann, das Aufschluss über die Kollisionswahrscheinlichkeit gibt, was zum Auslösen der nicht reversiblen oder reversiblen Rückhaltesysteme führt. Das Gefahrenpotential wird dabei aus vorgegebenen und aktuellen Fahrzeugdaten und/oder Umfelddaten ermittelt.

Vorteilhaft weist die Einrichtung hierzu Umfeld- und Fahrdynamiksensoren oder Modelle zur laufenden Erfassung von nahen und/oder entfernten Objekten und zur Ermittlung von fahrdynamischen Zustandswerten als Fahrzeugdaten auf. Die erfassten und berechneten Daten werden ständig aufs Neue ermittelt und laufend an einen Gefahrenrechner weitergeben. Im Gefahrenrechner wird eine Bewertung der Gefahrenlage des Fahrzeugs vorgenommen und in Abhängigkeit von dieser Bewertung und weiterer Kriterien oder Gewichtungen nach Gefahrenpotential gestufte oder nicht gestufte Stelleingriffe zur Steuerung von Aktuatoren des Kindersitzes ausgegeben.

Die Stelleingriffe zur Steuerung der Aktuatoren für z.B. aufblasbare Luftpolster, verstellbare Seitenwangen oder Verstellung der Position des Kindersitzes werden an eine Aktuatorensteuerung weitergegeben, die mit dem Gefahrenrechner verbunden ist, wobei die Aktuatorensteuerung nach Maßgabe des Bewertungsergebnisses durch den Gefahrenrechner die Stelleingriffe bedingt freischaltet, freischaltet oder sperrt.

Um unterschiedliche Ansprechzeiten der Aktuatoren auf ermittelte Gefahrensituationen auf der einen Seite und der allgemeine Gefahrensituation auf der anderen Seite berücksichtigen zu können, werden bevorzugt allgemeine und spezielle Gefahrenpotentiale für den Kindersitz ermittelt und in Abhängigkeit von den Gefahrenpotentialen aktuatorabhängige Stelleingriffe erzeugt. Allgemeine Gefahrenpotentiale bewerten dabei den längsdynamischen Fahrzustand und/oder den querdynamischen Fahrzustand des Fahrzeugs unter Berücksichtigung der Umwelt. Es werden zweckmäßig Stelleingriffe für die reversiblen Seitenwangen, Luftpolster in der Sitzschale und/oder Luftpolster im Sicherheitsgurt und/oder in den Seitenwangen des Kindersitzes generiert, wenn das aus mehreren Gefahrenpotentialen zusammengesetzte Gefahrenpotential einen Schwellenwert überschritten hat, das unter Berücksichtigung der Aktivierungszeit für die Aktuatoren des Kindersitzes gebildet wird.

Das Kind kann in einer komfortorientierten Einstellung im Kindersitz positioniert und angeschnallt werden. In einer sicherheitskritischen Situation werden reversible passive Schutzmaßnahmen aktiviert, die der Reduktion des Verletzungsrisikos dienen.

Mit Systemen, die das Fahrverhalten des eigenen Fahrzeugs und/oder das Umfeld mit geeigneter Umfeldsensorik wie z.B. Radarsensoren und/oder Lidarsensoren und/oder Kameras analysieren, und so die aktuelle Verkehrssituation bewerten, ist eine Bewertung der Unfallgefahr im Vorfeld einer Kollision möglich. Diese Informationen werden erfindungsgemäß verwendet, um reversibel die bisher rein passiven Schutzmaßnahmen nun an die Gefahrensituation angepasst zu aktivieren.

All die beschriebenen Maßnahmen können auch präventiv erfolgen oder aber auch in Abhängigkeit von gemessenen oder berechneten Größen, z.B. bei einer hohen (Brems)Verzögerung bzw. bei einer Notbremsung oder über eine Bremsassistenten-Funktion.

Die Bedingungen für die Aktivierung der Sicherheitsfunktionen eines oder mehrerer Kindersitze können vorteilhaft auch durch die Beobachtung des Kindes ermittelt (z.B. Einschlafen) werden.

Besonders vorteilhaft werden bei erhöhter Unfallgefahr, z.B. bei ermittelter Kollisionswahrscheinlichkeit, kleiner Zeit bis zum Aufprall (time to collision = ttc) und/oder großer Relativgeschwindigkeit des Fahrzeugs, die Seitenwangen reversibel, z.B. elektromotorisch an den zu schützenden Kinderkopf herangefahren, um seitliches Abrutschen beim Unfall zu vermeiden.

Eventuell vorhandene Luftpolster in den Seitenwangen oder der weiteren Sitzschale können im Vorfeld des Unfalls aufgeblasen werden und so den Kinderkörper optimal bei geringer Belastung im Kindersitz zu fixieren.

Weiterhin vorteilhaft zur Reduktion der Brustbelastung ist ein Aufblasen von Luftpolstern im Sicherheitsgurt schon vor einem Unfall, so dass bei einem nachfolgenden Unfall während der Kollision die Vorverlagerung des Kindes großflächiger und somit mit geringer Kraft abgestützt wird.

Vorteilhafte Weiterbildungen sind in den Unteransprüchen angegeben.

Ausführungsbeispiele der Erfindung sind in den Zeichnungen dargestellt und werden im folgenden näher beschrieben.

Es zeigen:
- Fig. 1: eine schematische Darstellung eines Kindersitzes mit ISO-FIX-Befestigungssystem in Seitenansicht
- Fig. 2: ein Ablaufschema zum Umschalten von dem komfort- orientierten Zustand der Rückhaltesysteme auf den sicherheitsorientierten Zustand der Rückhaltesys- teme

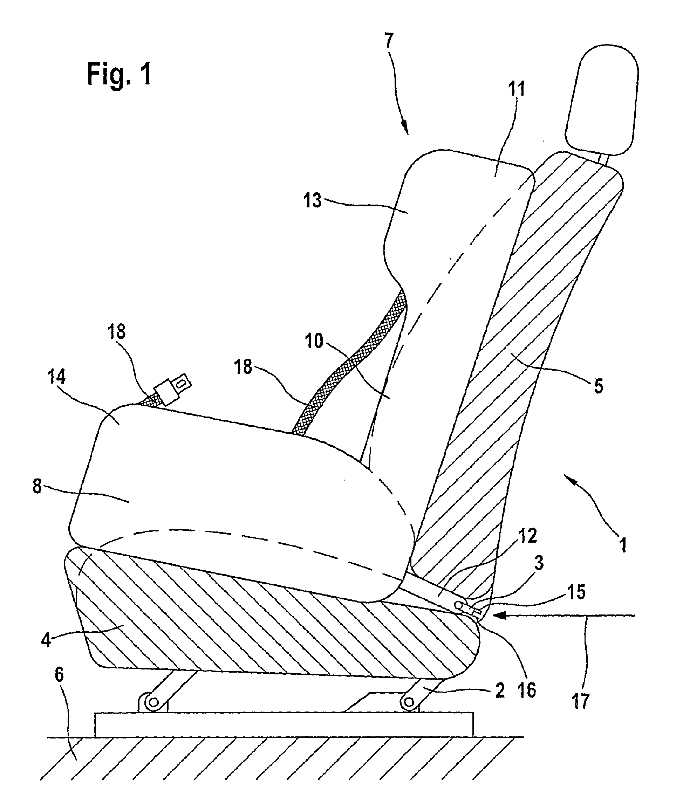

Nach der Figur 1 ist ein Fahrzeugsitz 1 mit Sitzrahmen 2 am Fahrzeugchassis 6 befestigt. An dem Sitzrahmen sind zwei ISO-FIX-Bügel 3 starr angebracht. Der Fahrzeugsitz 1 weist in bekannter Weise ein Sitzpolster 4 und ein Lehnenpolster 5 auf. Der auf dem Fahrzeugsitz 1 angeordnete Fahrzeugkindersitz 7 verfügt über eine Sitzfläche 8 und über eine Rückenlehne 10 mit einer in deren oberen Bereich vorgesehenen Kopfstütze 11. Sitzfläche 8, Rückenlehne 10 und Kopfstütze 11 sind integral ausgebildet und bilden eine Sitzschale. Die Kopfstütze 11 und die Sitzfläche 8 können seitliche Wangen 13, 14 für den Kopf und das Becken des Kindes aufweisen, die aufblasbar oder in anderer Weise verstell- bzw. verformbar sind. Weiterhin können seitliche, aufblasbare Stützen (nicht näher dargestellt) für den Torso des Kindes, die sich an die Rückenlehne 10 anschließen, vorgesehen sein. Ein nur schematisch angedeuteter Sicherheitsgurt 18 des Kindersitzes 7 verfügt ebenfalls über elastische, in ihrer Form veränderbare Kammern, die mittels einer im Fahrzeug oder direkt am Sitz vorgesehenen Druckquelle veränderbar sind. Der Kindersitz 7 ist über Sitzbefestigungsstreben 12 in die ISO-FIX-Bügel 3 gesetzt und hierin befestigt bzw. arretiert.

In dem ISO-FIX Befestigungssystem 12, 3 ist mindestens eine Stromversorgung 16 vorgesehen.

Die Daten können über eine bidirektionale Kommunikationsschnittstelle 15 übertragen werden. Dazu eignen sich sowohl preiswerte Bluetooth oder andere funkwellenbasierte Übertragungen ebenso wie direkte Verbindungen.

Stromversorgung 16 und Datenschnittstelle 15 können als separater Stecker oder in das ISO-Fix Befestigungssystem integriert sein. Dabei können Mittel zum Ermitteln einer Steckerbelegung vorgesehen sein.

Die Strom- und Datenanbindung 15, 16 ist zweckmäßig mit dem Fahrzeug-Innenraum Bussystem 17 verbunden, so dass die Komfort- und Sicherheitsfunktionen an das Fahrzeug-Kommunikationsnetz angeschlossen sind. Über das Bussystem stehen den Komfort- und Sicherheitsfunktionen des Kindersitzes alle Informationen des Fahrzeugs und dem Fahrzeug alle Informationen des Kindersitzes zur Verfügung. So kann bei unsachgemäßem Anschluss des Kindersitzes über die Steckerbelegung ein Start des Fahrzeugs verhindert werden.

Nach einer Ausführungsvariante erfolgt die Auslösung der Aktivierung der Sicherheitsfunktionen in einem oder in mehreren Kindersitzen über eine autonome, im Fahrzeug oder Kindersitz nachrüstbare separate Einheit (z.B. "Precrash-Rechner").

Dabei ist gemäß einer weiteren vorteilhaften Ausführungsvariante vorgesehen, dass der Kindersitz bezüglich der Aktivierung der Sicherheitsfunktionen und/oder Energieversorgung autonom ist. Hierzu ist der Kindersitz mit einer Einrichtung zum Umschalten zwischen Komfort- und Sicherheitseinstellung ausgerüstet. Die Daten, die geeignet sind einen Unfall vorherzusagen, können der Einrichtung über drahtlose Funkübertragung zur Verfügung gestellt werden. Als Daten kommen hierbei Fahrzeuginformationen aus dem eigenen und/oder einem am Verkehr beteiligten anderen Fahrzeug und/oder GPS-Daten in Frage. Der so ausgerüstete Kindersitz kann mit anderen Kindersitzen des gleichen Fahrzeugs verbunden werden, die nur über eine Aktuatorensteuerung und Aktuatoren verfügen.

Nach einer Ausführungsvariante erfolgt die Auslösung der Aktivierung der Sicherheitsfunktionen in einem oder in mehreren Kindersitzen über eine fahrzeugeigene zentrale Einheit, beispielsweise über den nachfolgend beschriebenen Gefahrenrechner.

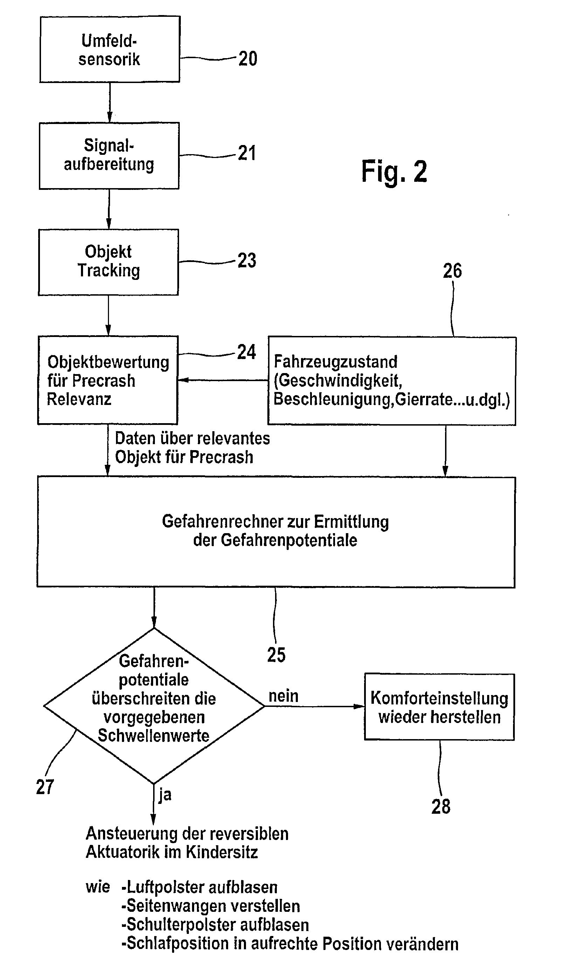

Figur 2 zeigt ein Ablaufschema zum Umschalten von dem komfortorientierten Zustand der Rückhaltesysteme auf den sicherheitsorientierten Zustand der Rückhaltesysteme. Mit dem gezeigten Ablauf können alle am Kindersitz 7 vorgesehenen Rückhaltesysteme ausgelöst werden, insbesondere elektrisch verstellbare und/oder aufblasbare Seitenwangen, aufblasbare Sitzschalen und/oder Sicherheitsgurte.

Logische Verzweigungen sind im Ablaufschema als Rauten dargestellt.

Ausgehend von einer gegebenen, bestimmten Situation werden mittels der Umfeldsensorik 20 Umgebungsdaten, wie Abstand zum Objekt, Relativgeschwindigkeit zum Objekt, Relativbeschleunigung zum Objekt, Status Objekt gültig, Status Typ Objekt, im Nah- und/oder Fernbereich des Fahrzeugs ermittelt. In die Signalaufbereitung 21 werden die Daten der Umfeldsensorik eingelesen. Die Signale werden anschließend konditioniert, so dass sie in der entsprechend richtigen Einheit zur Verfügung stehen. In dem Objekt-Tracking 23 findet sowohl das Tracking als auch eine Sensorfusion zwischen Nahbereichs- und Fernbereichssensorsignalen statt, so dass die folgenden Module nur noch das fusionierte Sensorsignal als Abstands-, Geschwindigkeits- und Beschleunigungssignal verwenden. Es ist ein einheitlich konsistentes Bild der Umwelt vorhanden. Dieses fusionierte Signal stellt demnach die Objektliste (Abstand, Typ, Relativgeschwindigkeit udgl.) dar. In 24 wird anhand einer Objektbewertung die Kollisionsrelevanz der Objekte vorermittelt. 24 berechnet dabei die Zeit bis zum Aufprall (time to collision=ttc), die Aufprallgeschwindigkeit und -beschleunigung, den Aufprallwinkel und der gleichen. In dem mit 24 verbundenen Gefahrenrechner 25 wird anhand der vorermittelten, relevanten Objekte die Unfallwahrscheinlichkeit untersucht. Hierzu ist der Gefahrenrechner mit einer Fahrzeug-Zustandserkennung verbunden. Die in der Fahrzeug-Zustanderkennung 26 gemessenen und/oder in Modellen ermittelten Fahrzustände werden im Gefahrenrechner 25 mit den relevanten Kollisionsobjekten logisch verknüpft und bewertet und anhand von ermittelten Gefahrenpotentialen, die Unfallwahrscheinlichkeit bewertet.

Der Gefahrenrechner 25 führt dabei im Wesentlichen zwei Verfahrensschritte durch.

Diese sind die
1. Berechnung von Gefahrenpotentialen aufgrund der Daten der Objektbewertung
2. Berechnung der Ansteuersignale.

Es wird dabei eine abstrakte Ebene definiert, die die Situation in geeigneter Weise bewertet. Diese Ebene wird durch die Gefahrenpotentiale realisiert. Das Gefahrenpotential ist eine dimensionslose Größe im Bereich zwischen 0 und 100. Je größer das Gefahrenpotential ist, je gefährlicher ist auch die Situation. Die Aktuatoren werden lediglich aufgrund von Schwellwertabfragen der Gefahrenpotentiale angesteuert. Dabei können mehrere Gefahrenpotentiale kombiniert werden, um einen Aktuator zu aktivieren. Dies bedeutet, dass die Zustandsbewertung zunächst nur eingeschränkt (siehe später spezielle Gefahrenpotentiale) bzw. nicht (siehe später allgemeingültige Gefahrenpotentiale) die Auswahl bzw. die Betätigungsdosierung der Aktuatoren, wie Seitenwangen, reversible Gurtstraffer, Sitzpolster aufblasen, etc, beinhaltet. Aus den Ausführungen wird deutlich, dass eine bestimmte Situation durch mehrere Gefahrenpotentiale bewertet wird. Dies lässt eine umfangreichere Bewertung der Situation zu.

Es gibt zwei unterschiedliche Gruppen von Gefahrenpotentialen:
A. aktuatorunabhängige, allgemeingültige Gefahrenpotentiale
B. aktuatorabhängige, spezielle Gefahrenpotentiale

So gibt es beispielsweise ein Gefahrenpotential, das den längsdynamischen Fahrzustand bewertet. Die Bewertung der längsdynamischen Fahrsituation wird über ein längsdynamisches Gefahrenpotential realisiert unter der Bedingung, dass die Geschwindigkeit größer als eine Mindestgeschwindigkeit ist. Dies wird z.B. mit einem Fuzzy-Inferenz-System realisiert. Fuzzy-Logik ermöglicht es, menschliche Verhaltensweisen oder menschliches Kausalwissen zu mathematisieren und damit durch Rechner imitierbar zu machen. Danach wird die Verkehrssituaton und der Fahrzustand mit Hilfe von Zugehörigkeitsfunktionen klassifiziert. So wird als erste Eingangsgröße die Differenz zwischen Soll- und Istabstand bezogen auf den Sollabstand bewertet.

Der Sollabstand hängt dabei funktional von der eigenen Fahrgeschwindigkeit ab.

Die Relativgeschwindigkeit als zweite Eingangsgröße wird ebenso durch entsprechende Zugehörigkeitsfunktionen kategorisiert. Die Ausgangsgröße - also das längsdynamische Gefahrenpotential - wird ebenso mit Hilfe von Zugehörigkeitsfunktionen kategorisiert.

Diese so bewerteten Eingangsgrößen werden mit Hilfe von einfach formulierbaren logischen Verknüpfungen,
"wenn..., dann..."

Beziehungen (Regeln) ausgewertet und ergeben dann für jede einzelne Regel, je nach Erfüllungsgrad einen Anteil am gesamten Gefahrenpotential. Das resultierende Gefahrenpotential ergibt sich aus der Akkumulation der einzelnen Teilimplikationen.

Das längsdynamisches Gefahrenpotential, das abhängig von Umfeldsensorinformationen ist, wird wie folgt bestimmt:
Die Bewertung der längsdynamischen Fahrsituation wird über ein weiteres längsdynamisches Gefahrenpotential realisiert. Diese Gefahrenpotential wird wie folgt berechnet:
   1. Bedingung: Die Fahrzeuggeschwindigkeit muss größer einem Schwellenwert sein (im Rangierbetrieb wird kein Gefahrenpotential berechnet)
   2. Bedingung: Die Relativgeschwindigkeit zum detektierten Objekt muss kleiner als eine negative Schwelle sein.

Dieses Gefahrenpotential setzt die Verzögerung die notwendig ist, um eine Kollision zu verhindern, in Relation zu einem Anteil der maximal auf die Straße übertragbare Verzögerung.

Entsprechend gibt es ein allgemeingültiges Gefahrenpotential, das den querdynamischen Fahrzustand beschreibt. Das querdynamisches Gefahrenpotential ist beispielsweise abhängig von Fahrdynamikinformationen der ESP-Funktion.

Dieses querdynamische Gefahrenpotential ist 0 solange kein ESP Eingriff stattfindet. Greift hingegen das ESP in die Fahrdynamik ein, ist dieses Gefahrenpotential 100.

Diese Definition ist nur eine erstes Ausführungsbeispiel. Benutzt man nicht das ESP on/off Flag, sondern die Information über das Zusatzgiermoment des ESP bezogen auf ein Maximum bei bestimmten Reibwertbedingungen, das aufgebracht werden muss, um das Fahrzeug wieder zu stabilisieren, wird eine feinere Abstufung dieses Gefahrenpotentials erzielt.

Im Gegensatz zu diesen allgemeingültigen Gefahrenpotentialen gibt es auf bestimmte Aktuatoren zugeschnittene, spezielle Gefahrenpotentiale. Diese Gefahrenpotentiale tragen der Tatsache Rechnung, dass unterschiedliche Aktuatoren auch unterschiedliche Aktivierungszeiten und Schutzpotentiale haben. Das bedeutet, dass die selbe Situation für einen Aktuator mit langer Aktivierungszeit vergleichsweise kritischer ist als für einen mit kurzer. Ebenso bedeutet es, dass die selbe Situation für einen Aktuator mit hohem Schutzpotential vergleichsweise kritischer ist als für einen mit geringem Schutzpotential.

Das aktuatorabhängige, spezielle Gefahrenpotential zur Ansteuerung z.B. des reversiblen Gurtstraffers des Kindersizes, ist abhängig von Umfeldsensorinformationen.

Dieses Gefahrenpotential wird wie folgt berechnet:
1. Bedingung: Die Fahrzeuggeschwindigkeit muss größer einem Schwellenwert sein (im Rangierbetrieb wird kein Gefahrenpotential berechnet)
2. Bedingung: Die Relativgeschwindigkeit zum detektierten Objekt muss negativ sein.

Die eigentliche Berechnung des Gefahrenpotentials bildet den Quotienten aus aktuell bestimmter Time to Collision (ttc) aus den Sensorinformationen und der mittleren Aktivierungszeit des reversiblen Gurtstraffers, der verstellbaren Seitenwangen des Kindersitzes, der aufblasbaren Sitzschale u. dgl.

Dieser Quotient gibt an wie viel Zeit noch bleibt, um den Aktuator im Mittel vollständig zu aktivieren.

Zur Erhöhung des Komforts kann als Erweiterung dieser Beziehung vorgesehen werden, dass das oben berechnete Gefahrenpotential in Abhängigkeit des Quotienten aus notwendiger Verzögerung und maximal auf die Straße übertragbarer Verzögerung auf einen bestimmten Wert begrenzt wird. Dies bewertet die Möglichkeit des Fahrers vor dem Unfall noch zu bremsen, also die Zustandsgrößen Geschwindigkeit und Beschleunigung zu verändern. Diese konstanten Zustandsgrößen werden bei der Berechnung der Zeit bis zum Aufprall, so wie oben benutzt, vorausgesetzt.

Raute 27 der Figur kennzeichnet die Entscheidung. Überschreiten die Gefahrenpotentiale die vorgegebenen Schwellenwerte, werden die Stelleingriffe für den Kindersitz freigegeben.

Ist die Gefahrensituation vorbei, wird in 28 die zu Fahrtantritt eingestellte Komforteinstellung wieder hergestellt und das Kind kann wieder entspannt mitreisen.

## Patentansprüche

1. Einrichtung für einen Kindersitz in einem Fahrzeug mit einer Umschaltung zwischen Komfort- und Sicherheitseinstellung des Kindersitzes, abhängig von Informationen, die geeignet sind, einen Unfall vorherzusagen, wobei die Umschaltung zwischen Komfort- und Sicherheitseinstellung mindestens in Abhängigkeit von durch einen Gefahrenrechner ermittelten Gefahrenpotentialen aus vorgegebenen und aktuellen Fahrzeugdaten und/oder Umfelddaten erfolgt,
**dadurch gekennzeichnet, dass**
der Gefahrenrechner Ansteuersignale für Elemente des Kindersitzes wie zum Beispiel für aktive Kopfstützenseitenwangen, aktive Schulterstützen, einem aktiven Fangtisch und/oder aktive, kindersitzeigene Sicherheitsgurte abhängig von den ermittelten Gefahrenpotentialen berechnet, wobei Stelleingriffe zur Steuerung von Aktuatoren an eine Aktuatorensteuerung weitergegeben werden, die mit dem Gefahrenrechner verbunden ist und die Aktuatorensteuerung nach Maßgabe des Bewertungsergebnisses durch den Gefahrenrechner die Stelleingriffe bedingt freischaltet, freischaltet oder sperrt, wobei die Elemente im deaktivierten Zustand in einer neutralen Ruheposition beharren und einem Kind ein sicheres und trotzdem bequemes Mitfahren mit entsprechend großer, kindgerechter Bewegungsfreiheit ermöglichen.

2. Einrichtung nach Anspruch 1, **gekennzeichnet durch** am Fahrzeug vorgesehene Umfeldsensoren, die laufend nahe und/oder entfernte Objekte erfassen, **durch** Fahrdynamiksensoren oder Modelle, die fahrdynamische Zustandswerte als Fahrzeugdaten ermitteln und die erfassten und ermittelten Daten laufend an einen Gefahrenrechner weitergeben, wobei der Gefährenrechner eine Bewertung der Gefahrenlage des Fahrzeugs vornimmt und in Abhängigkeit von der Bewertung und weiterer Kriterien oder Gewichtungen nach Gefahrenpotential gestufte oder nicht gestufte Stelleingriffe zur Steuerung von Aktuatoren des Kindersitzes ausgibt.

3. Einrichtung nach Anspruch 1 oder 2, **dadurch gekennzeichnet, dass** allgemeine und spezielle Gefahrenpotentiale für den Kindersitz ermittelt werden und in Abhängigkeit von den Gefahrenpotentialen aktuatorabhängige Stelleingriffe erzeugt werden.

4. Einrichtung nach einem der Ansprüche 1 bis 3, **dadurch gekennzeichnet, dass** Stelleingriffe für die reversiblen Seitenwangen, Luftpolster in der Sitzschale und/oder Luftpolster im Sicherheitsgurt und/oder in den Seitenwangen des Kindersitzes generiert werden, wenn das aus mehreren Gefahrenpotentialen zusammengesetzte Gefahrenpotential einen Schwellenwert überschritten hat, das unter Berücksichtigung der Aktivierungszeit und des Schutzpotentials für die Aktuatoren des Kindersitzes gebildet wird.

5. Einrichtung nach Anspruch 4, **dadurch gekennzeichnet, dass** allgemeine Gefahrenpotentiale den längsdynamischen Fahrzustand und/oder den querdynamischen Fahrzustand bewerten.

6. Einrichtung nach einem der Ansprüche 1 bis 5, **dadurch gekennzeichnet, dass** die Ansteuerung der Sicherheitseinstellung des Kindersitzes in Abhängigkeit von einem Beobachtungssystem für das Kind erfolgt.

7. Kindersitz mit einer Einrichtung nach einem der Ansprüche 1 bis 6.

8. Kindersitz nach Anspruch 7, **dadurch gekennzeichnet dass** der Kindersitz eine Datenschnittstelle und eine Stromversorgung aufweist.

9. Kindersitz nach Anspruch 7 oder 8, **dadurch gekennzeichnet, dass** der Kindersitz eine ISO-FIX Standardbefestigung aufweist, die als Stromversorgung ausgebildet ist.

10. Kindersitz nach Anspruch 8 oder 9, **dadurch gekennzeichnet, dass** der Kindersitz eine ISO-FIX Stan- , dardbefestigung aufweist, die als Datenschnittstelle ausgebildet ist.

11. Kindersitz nach Anspruch 8, **dadurch gekennzeichnet, dass** die Datenschnittstelle als drahtlose Funkübertragungseinheit ausgebildet ist.

12. Kindersitz nach einem der Ansprüche 8 bis 11, **dadurch gekennzeichnet, dass** die Strom- und Datenanbindung mit dem Fahrzeug-Innenraum Bussystem verbunden ist.

13. Kindersitz nach Anspruch 7, **dadurch gekennzeichnet, dass** er eine Einrichtung zur Vorhersage eines Unfalls aufweist.

14. Kindersitz nach Anspruch 7 oder 13, **dadurch gekennzeichnet, dass** der Kindersitz mit der Einrichtung zur Vorhersage eines Unfalls über eine Schnittstelle mit einem weiteren Kindersitz verbindbar ist, wobei die Aktuatoren des weiteren Kindersitzes von der Einrichtung des Kindersitzes ansteuerbar sind.

15. Fahrzeug mit einem Kindersitz mit einer Einrichtung nach einem der Ansprüche 1 bis 14.

## Claims

1. Device for a child seat in a vehicle, said device switching between the comfort setting and the safety setting of the child seat in dependence on information suitable for predicting an accident, wherein said switching between the comfort setting and the safety setting takes place at least in dependence on danger potentials determined by a danger calculator from predetermined and current vehicle data and/or surroundings data,
**characterized in that**
the danger calculator calculates, in dependence on the determined danger potentials, control signals for elements of the child seat, for example for active side cheeks of the headrest, active shoulder rests, an active catching table and/or active child-seat-integral safety belts, wherein control interventions for the control of actuators are forwarded to an actuator controlling means connected to the danger calculator and the actuator controlling means conditionally enables, enables or disables, according to the result of the assessment by the danger calculator, the control interventions, wherein the elements, when deactivated, remain in a neutral position and enable a child to travel safely, but nevertheless comfortably, and to enjoy a correspondingly ample room to move that satisfies a child's needs.

2. Device according to claim 1, **characterized by** surroundings sensors provided on the vehicle, which surroundings sensors continuously detect nearby and/or remote objects, by vehicle-movement-dynamics sensors or by models that determine vehicle-movement-dynamics state values as vehicle data and continuously forward the detected and determined data to a danger calculator, wherein the danger calculator assesses the situation of danger with regard to the vehicle and outputs, in dependence on the assessment and on further criteria or weightings, control interventions for the control of actuators of the child seat, which control interventions are graduated according to danger potentials or are not graduated.

3. Device according to claim 1 or 2, **characterized in that** general and special danger potentials for the child seat are determined and actuator-dependent control interventions are generated in dependence on the danger potentials.

4. Device according to any one of claims 1 to 3, **characterized in that** control interventions for the reversible side cheeks, air cushions in the seat shell and/or air cushions in the safety belt and/or in the side cheeks of the child seat are generated if the danger potential made up of several danger potentials has exceeded a threshold value, which danger potential is formed considering the activation time and the protection potential for the actuators of the child seat.

5. Device according to claim 4, **characterized in that** general danger potentials assess the longitudinal-dynamics driving state and/or the lateral-dynamics driving state.

6. Device according to any one of claims 1 to 5, **characterized in that** the safety setting of the child seat is controlled in dependence on an observation system for the child.

7. Child seat with a device according to any one of claims 1 to 6.

8. Child seat according to claim 7, **characterized in that** the child seat has a data interface and a power supply unit.

9. Child seat according to claim 7 or 8, **characterized in that** the child seat has an ISOFIX standard attachment system that is designed as a power supply unit.

10. Child seat according to claim 8 or 9, **characterized in that** the child seat has an ISOFIX standard attachment system that is designed as a data interface.

11. Child seat according to claim 8, **characterized in that** the data interface is designed as a wireless radio transmission unit.

12. Child seat according to any one of claims 8 to 11, **characterized in that** the power and data connection is connected to the bus system of the passenger compartment of the vehicle.

13. Child seat according to claim 7, **characterized in that** it has a device for predicting an accident.

14. Child seat according to claim 7 or 13, **characterized in that** the child seat with the device for predicting an accident can be connected to an additional child seat via an interface, wherein the actuators of the additional child seat can be controlled by the device of the child seat.

15. Vehicle with a child seat with a device according to any one of claims 1 to 4.

## Revendications

1. Equipement pour un siège pour enfant dans un véhicule avec une commutation entre un réglage de confort et un réglage de sécurité du siège pour enfant en fonction d'informations qui sont appropriées pour prédire un accident, la commutation entre le réglage de confort et le réglage de sécurité s'effectuant au moins en fonction de risques potentiels déterminés par un calculateur de risques à partir de données de véhicule et/ou de données ambiantes prédéfinies et actuelles,
**caractérisé en ce que**
le calculateur de risques calcule des signaux de pilotage pour des éléments du siège pour enfant comme par exemple pour des joues latérales actives d'appui-tête, des appui-épaules actifs, une table bouclier active et/ou des ceintures de sécurité actives adaptées aux sièges pour enfant, en fonction des risques potentiels déterminées, des manoeuvres de réglage étant transférées pour la commande d'actionneurs à une commande d'actionneur qui est raccordée au calculateur de risques, et la commande d'actionneur libérant de façon conditionnelle, libérant ou bloquant les manoeuvres de réglage en fonction du résultat d'évaluation par le calculateur de risques, les éléments demeurant dans une position de repos neutre dans l'état désactivé et permettant à un enfant de voyager de façon sûre et cependant confortable en disposant d'une liberté de mouvement importante en conséquence et convenant aux enfants.

2. Equipement selon la revendication 1, **caractérisé par** des capteurs d'ambiance prévus sur le véhicule qui détectent en permanence des objets proches et/ou éloignés, par des capteurs de dynamique de conduite ou des modèles qui déterminent en tant que données de véhicule des valeurs d'état liées à la dynamique de conduite et transmettent en permanence les données détectées et déterminées à un calculateur de risques, le calculateur de risques effectuant une évaluation de la situation de risques du véhicule et produisant, en fonction de l'évaluation et d'autres critères ou pondérations, des manoeuvres de réglage étagées ou non étagées selon le risque potentiel pour la commande d'actionneurs du siège pour enfant.

3. Equipement selon la revendication 1 ou 2, **caractérisé en ce que** des risques potentiels généraux et spéciaux sont déterminés pour le siège pour enfant, et **en ce que** des manoeuvres de réglage dépendant d'actionneurs sont produites en fonction des risques potentiels.

4. Equipement selon une des revendications 1 à 3, **caractérisé en ce que** des manoeuvres de réglage sont générées pour les joues latérales réversibles, des coussins d'air dans la coque du siège et/ou des coussins d'air dans la ceinture de sécurité et/ou dans les joues latérales du siège pour enfant quand le risque potentiel composé de plusieurs risques potentiels a dépassé une valeur de seuil qui est formée en prenant en compte le temps d'activation et le risque potentiel pour les actionneurs du siège pour enfant.

5. Equipement selon la revendication 4, **caractérisé en ce que** des risques potentiels généraux évaluent l'état de conduite dynamique dans le sens longitudinal et/ou l'état de conduite dynamique dans le sens transversal.

6. Equipement selon une des revendications 1 à 5, **caractérisé en ce que** le pilotage du réglage de sécurité du siège pour enfant s'effectue en fonction d'un système d'observation de l'enfant.

7. Siège pour enfant avec un équipement selon une des revendications 1 à 6.

8. Siège pour enfant selon la revendication 7, **caractérisé en ce que** le siège pour enfant présente une interface de données et une alimentation électrique.

9. Siège pour enfant selon la revendication 7 ou la revendication 8, **caractérisé en ce que** le siège pour enfant présente une fixation standard ISO-FIX qui est constituée en tant qu'alimentation électrique.

10. Siège pour enfant selon la revendication 8 ou la revendication 9, **caractérisé en ce que** le siège pour enfant présente une fixation standard ISO-FIX qui est constituée en tant qu'interface de données.

11. Siège pour enfant selon la revendication 8, **caractérisé en ce que** l'interface est constituée en tant qu'unité sans fil de transmission radio.

12. Siège pour enfant selon une des revendications 8 à 11, **caractérisé en ce que** la liaison de courant et de données est raccordée au système de bus de l'habitacle du véhicule.

13. Siège pour enfant selon la revendication 7, **caractérisé en ce qu'**il présente un équipement de prédiction d'un accident.

14. Siège pour enfant selon la revendication 7 ou la revendication 13, **caractérisé en ce que** le siège pour enfant avec l'équipement de prédiction d'un accident peut être raccordé à un autre siège pour enfant par le biais d'une interface, les actionneurs de l'autre siège pour enfant pouvant être pilotés par l'équipement du siège pour enfant.

15. Véhicule avec un siège pour enfant avec un équipement selon l'une des revendications 1 à 4.
